# EUROPEAN PATENT APPLICATION

(11) **EP 0 549 004 A1**
(43) Date of publication of application: **30.06.1993**
(21) Application number: 92202830.3
(22) Date of filing: 16.09.1992
(51) Int. Cl.: F04D 19/04, F04D 27/02, H02P 3/18

(54) **An electronic braking device for asynchronous motors**

(30) Priority: 24.12.1991 IT TO911034
(71) Applicant: VARIAN S.p.A., I-10040 Leini (Torino) (IT)
(72) Inventor: Capetti, Emilio, I-10090 Castiglione Torines, Turin (IT)
(74) Representative: Robba, Eugenio

(57) **Abstract**

The invention relates to an electronic braking device for asynchronous motors particularly for asynchronous motor equipped with magnetic suspensions such as those employed in turbomolecular pumps, comprising a circuit for recovering the kinetic energy of the rotor during the decelerating phase due to the absence of feeding electric current from the mains, which is adapted to return an electric current that can be used for the emergency feeding the magnetic suspensions (8).

Such circuit can further comprise an auxiliary battery (10) for feeding a circuit (9) controlling the magnetic suspensions (8) during the final phase of the stopping cycle of the motor (5) caused by the absence of mains current.

## Description

The present invention relates to an electronic braking device for asynchronous motors particularly for asynchronous motors equipped with magnetic suspensions such as those employed in turbomolecular pumps.

The asynchronous motors equipped with magnetic suspensions such as those used e.g. in turbomolecular pumps, generally provide for an electronic circuit for the motor braking which applies a braking action to the motor and supplies back an electric current to the feeding circuit when the driving frequency of the motor decreases.

The electric current generated during the braking phase is usually dissipated in a resistor which is inserted into the circuit when the brake is actuated.

In this type of motors a dedicated circuit feeds the magnetic suspensions and deenergizes them when the motor is still.

However in case of feeding failure, the magnetic suspensions are abruptly deenergized and the rotor of the asynchronous motor returns to its rest position at the maximum speed which in turbomoleculat pumps is typically in the order of 36,000 rpm, thus causing a breakage of the motor's bearings.

In order to prevent breaking the members supporting the asynchronous motor, suitable feeding devices can be provided that are equipped with batteries and an inverter, and ensure the feeding of the magnetic suspensions until the rotor of the asynchronous motor has stopped even in the absence of a feeding from the mains.

Further the bearings supporting the rotor can be made more resistant to mechanical stresses in order to reduce the consequences of a sudden fall of the magnetic suspensions caused by a lack of feeding.

These measures however have the shortcoming to be complex and costly both in respect of their installment and of their proper working, since the batteries are expensive and must be periodically replaced, that is after a given number of cycles of discharge and charge.

The object of the present invention is that of providing a device capable of eliminating the risk of damages due to a sudden lack of current in asynchronous motors of the type equipped with magnetic suspensions used in turbomolecular pumps, that allows for a gradual stopping of the rotor, is reliable, easy to be manufactured, and of low costs, both for the installment and the use.

The above and additional objects are accomplished by the an electronic braking device for asynchronous motors equipped with magnetic suspensions for turbomolecular pumps, comprising a circuit for recovering and converting into an electric current the kinetic energy of the rotor of the asynchronous motor when this latter rotates in the absence of feeding from the mains, which according to the invention which is characterized in that said circuit comprises a dedicated converting unit for feeding the rotor's magnetic suspensions of the asynchronous motor during the decelerating rotation of the rotor.

Additional characteristics and advantages of the invention will be better understood from the description of a preferred but not exclusive embodiment of the device illustrated -only as a non limiting example- in the attached drawings, in which:
Fig. 1 is a block diagram of the device according to the invention;

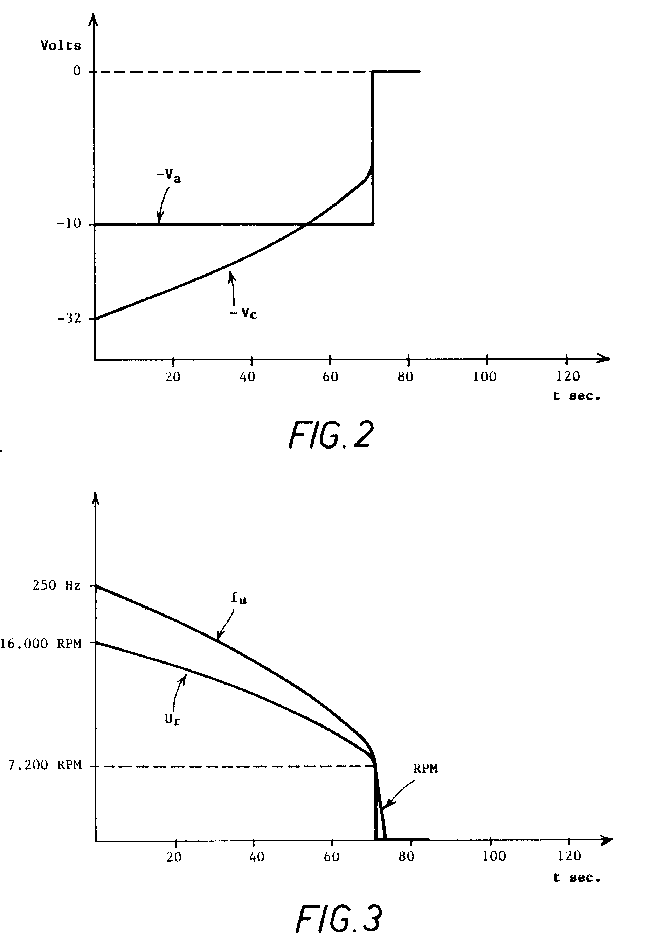

Fig. 2 is a graph showing the voltages V_{c} and -Vₐ in the final decelerating phase of the rotor;
Fig. 3 is a graph showing the driving frequency fᵤ and the speed Uᵣ of the rotor in the decelerating phase corresponding to the graph of Fig. 2.

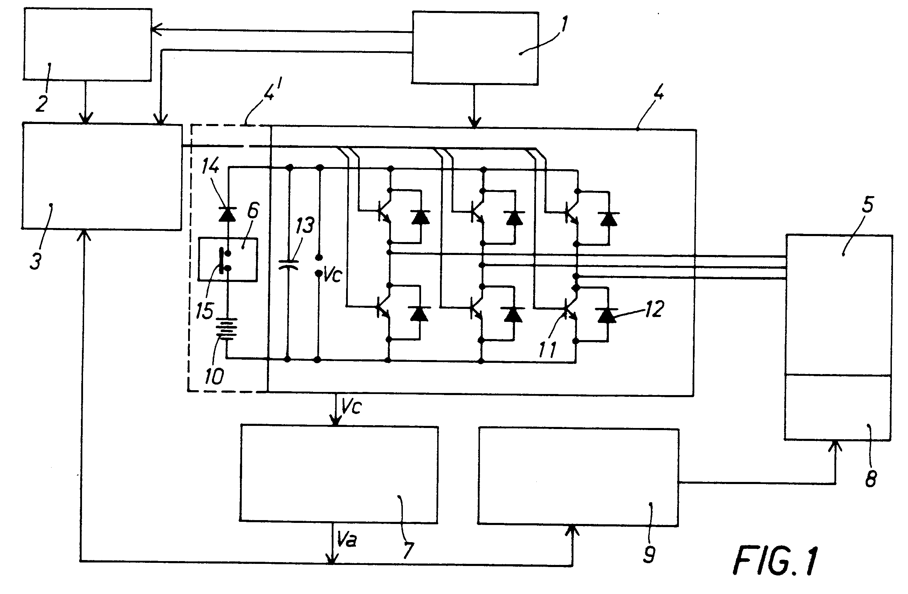

With reference to Fig. 1 the braking device of the invention comprises a first feeding unit 1 and a second unit 2 for detecting a lack of the feeding current and adapted to switch a third unit 3 controlling the driving frequency, from a working phase under normal feeding to a decelerating and braking phase caused by lack of such feeding.

Such unit 3 controls the frequency at which a feeding circuit 4 is driven which circuit comprises transistors 11 each in parallel with an associated diode and capable of supplying the asynchronous motor 5 with a three-phase alternating current at the a frequency imposed by the control unit 3.

The feeding circuit 4 with transistors 11 further comprises a capacitor 13 for storing a charge during the normal working phase when the motor is fed by the mains. The voltage Vc across such capacitor 13 is applied to a unit 7 converting the variable DC voltage V_{c} into a regulated DC voltage Vₐ that feeds both the circuit 3 and the circuit 9 controlling the magnetic suspensions as will be better illustrated later.

When the feeding voltage from the mains fails, the detecting unit 2 switches the control unit 3 which start decreasing the driving frequency to the transistors 11 of the circuit 4 feeding the asynchronous motor. The driving frequency is adjusted as a function of the frequency of the residual rotation of the motor so that this latter remain higher. This way the motor 5 is braked and thus a three-phase alternating current is returned to the circuit 4 with transistors 11.

Such current generated by the motor 5 in the decelerating phase is rectified by the diodes 12 of the circuit 4 and charges the capacitor 13 which is simultaneously discharged by a current drawn by the unit 7 that in the illustrated embodiment feeds the unit 9 controlling the magnetic suspensions 8 of the asynchronous motor 5 and the control circuit 3. Thus the asynchronous motor is forced to slow down whereas the current it supplies back is used to keep the magnetic suspensions 8 lifted until the capacitor 13 has fully discharged and the voltage supplied by the motor 5 is no longer enough to this aim.

For a more gradual stopping of the motor-magnetic suspensions system in the final phase it has been found to be particularly effective the addition of a feeding auxiliary stage 4' comprising a small battery 10 and a diode 14, which feeds the circuit 4 when the voltage on capacitor 13 is lower than that of the battery.

Such stage 4' further comprises a unit 6 for limiting the dischage current which unit disconnects the battery through an electromechanical or static contact 15 to protect the battery from an excessive discharge.

In an embodiment of the invention it was found that with a capacitor 13 of 25 mF the rotor speed Uᵣ changes from 36,000 rpm to 7,200 rpm when the capacitor voltage V_{c} decreases from V_{c} = 70 V to V_{c} = 10 V. When the feeding auxiliary stage 4' is present the final rotor speed can be reduced to 1,500 rpm before the unit 6 protecting the battery has to interveneby opening the circuit by means of the contact 15 for preventing a damaging discharge of the battery.

## Claims

1. An electronic braking device for an asynchronous motor (5) equipped with magnetic suspensions (8) for turbomolecular pumps, comprising a circuit for recovering and converting into an electric current the kinetic energy of the rotor of the asynchronous motor (5) when this latter rotates in the absence of feeding from the mains, characterized in that said circuit comprises a dedicated converting unit for feeding the rotor's magnetic suspensions (8) of the asynchronous motor (5) during the decelerating rotation of the rotor.

2. A device as claimed in claim 1, characterized in that said circuit for recovering the kinetic energy comprises a detection unit (2) signalling the lack of feeding from the mains to a unit (3) controlling the driving frequency of a circuit (4) feeding the asynchronous motor (5).

3. A device as claimed in claim 2, characterized in that said circuit (4) feeding the asynchronous motor (5) comprises a three-phase bridge of bipolar transistors (11) the bases of which are controlled by said control unit (3), a diode (12) being connected between the collector end the emitter of each transistor (11) of said bridge.

4. A device as claimed in claim 2, characterized in that said circuit (4) feeding the asynchronous motor (5) comprises a three-phase bridge of MOSFET transistors (11).

5. A device as claimed in claim 3 or 4, characterized in that said circuit (4) feeding the asynchronous motor (5) comprises a storage capacitor (13) connected in parallel with said bridge which is charged during the operation of said feeding circuit (4) in presence of a feeding current supplied by the mains, and is discharged when the rotor decelerates because of a lack of said mains feeding.

6. A device as claimed in claim 5, characterized in that it comprises a unit (7) for converting a D.C. variable voltage into a D.C. regulated voltage, the input of said unit (7) being connected to said storage capacitor (13) and the output of said unit (7) feeding both a unit (9) controlling the magnetic suspensions (8) of the asynchronous motor (5) and said control circuit (3).

7. A device as claimed in claim 5 or 6, characterized in that it further provides for an auxiliary feeding stage (4') comprising a battery (10) for charging said storage capacitor (13) and connectable in parallel therewith when the rotating speed of the rotor is too low for returning a voltage that can be used for charging the capacitor (13).

8. A device as claimed in claim 7, characterized in that said auxiliary stage (4') further provides for a protection unit for the battery (10) which comprises a controlled switch (15) for cutting out the battery (10) when the rotor's speed of rotation becomes lower than a predetermined value to prevent damaging the battery.
